(19) **Europäisches Patentamt**

**European Patent Office**

**Office européen des brevets**

(11) **EP 0 828 357 B1**

(12) **EUROPEAN PATENT SPECIFICATION**

(45) Date of publication and mention
of the grant of the patent:
**26.01.2005   Bulletin 2005/04**

(51) Int Cl.⁷: $H04B\ 10/155$, $H04B\ 10/17$, $H04B\ 10/08$

(21) Application number: **97306238.3**

(22) Date of filing: **15.08.1997**

(54) **Optical element power control**

Leistungsregelung eines optischen Elements

Contrôle de puissance d'élément optique

(84) Designated Contracting States:
**DE FR GB**

(30) Priority: **06.09.1996  GB 9618706**
**18.09.1996  US 715662**

(43) Date of publication of application:
**11.03.1998   Bulletin 1998/11**

(73) Proprietor: **Nortel Networks Limited**
**St. Laurent, Quebec H4S 2A9 (CA)**

(72) Inventor: **Roberts, Kim Byron**
**Welwyn Garden City, Herts AL8 7DL (GB)**

(74) Representative: **Anderson, Angela et al**
**Nortel Networks**
**IP Law Group,**
**Harlow Laboratories,**
**London Road**
**Harlow, Essex CM17 9NA (GB)**

(56) References cited:
**GB-A- 2 294 170**        **US-A- 4 958 354**
**US-A- 5 374 973**        **US-A- 5 396 360**
**US-A- 5 513 029**

**Description**

**Field of the Invention**

The present invention relates to control systems for optical elements, to optical amplifiers incorporating control systems, to methods of controlling an optical element, and to methods of operating an optical transmission system.

**Background of the Invention**

The distance between optical terminals of optical fibre transmission systems is limited by various factors, including the optical power of the optical signal being transmitted. If the power is too low, the signal will be difficult to distinguish from noise. If the power is too great, distortion of the signal will occur. One type of distortion which can occur in optical fibre is self-phase modulation. The onset of this type of non-linear degradation can be quite sharp, in that only one or two dB of increase in power level can push a signal from optimal performance to a failed state.

Thus, for a given target acceptable bit error rate (BER), or acceptable risk of any errors, there will be an upper limit to the optical power of the optical signal when it is launched into an optical fibre by a transmitter. Correspondingly, there will be a lower power limit or threshold for the optical signal at the receiver, following inevitable attenuation in the optical fibre. Output power levels generally need to be held as high as possible so that the power level after attenuation by the optical link does not fall below the noise threshold, and become excessively degraded by optical noise.

Careful control of the output power of transmitters and of repeaters, or optical amplifiers is therefore necessary. Other optical elements such as filters, attenuators, dispersion compensators, and so on may also need to be controlled bearing in mind the optical signal power requirements. The power gains and losses in the optical path, and in the various optical elements in the path, will vary with wavelength, age, and temperature. In some cases, the power will be affected by multiplexed signals being added or removed. For example, in optical amplifiers, the gain at each wavelength depends upon the pump power into the amplifier and on the number and power levels of the signals present.

Conventionally, to ensure that all signals in the transmission system do not suffer excessive degradation, the worst case sums of all these variations must be identified for a particular system, and a margin of error, a power margin, must be allowed for the worst case variations. This margin reduces the available performance of the system, for example reducing the maximum allowed transmission distances between repeaters or optical amplifiers.

It is known to control optical amplifiers to maintain a constant pump current, or a constant pump power, or a constant gain. However, the preferred type of control is constant total output power control. The control of gain in an optical amplifier such as an erbium-doped amplifier is discussed in US 5 088 095. Undesirable gain fluctuations resulting from saturation effects in the amplifier are compensated in a number of ways. A feed forward automatic gain control loop acts on the pump source to increase the gain when a transient of higher signal power is detected at the amplifier input. A second method is to compensate for any variation of signal input by actively counter modulating the optical power of one of the input channels. Finally, it is suggested to feed back a selected wavelength from the output to the input. Ring lasing occurs at the feedback wavelength and consequently the gain in the amplifier is held at a constant value.

It is known from US 5 513 029 (Roberts) to measure the relative output powers of different wavelengths in a wavelength division multiplexed (WDM) system, and control the individual wavelength powers to adjust imbalances.

GB 2,294,170 describes an optical amplifier for amplifying a wavelength-division-multiplexed signal which can equalise the gains of signals at two different wavelengths.

In many situations, it will not be practical to control separately the output powers of different wavelength bands in a WDM system. Where it is only practical to control the overall output power of an optical element, or the power of two or more bands, there remains the necessity to allow for considerable power margins. For example, when more than one optical wavelength is amplified by an optical amplifier, a desired total power level may be set at 20 milliwatts. For four wavelengths, this gives a mean power of 5 millwatts per wavelength. However, owing to gain variations including gain tilt, one wavelength may be at 17 milliwatts and another three may be at 1 milliwatt each. The 17 milliwatt signal will be severely degraded by non-linearities. This example is over simplified for the purpose of clarity.

**Summary of the Invention**

The invention is concerned with providing power control which addresses the abovementioned problems.

According to the invention, there is provided a control system for an optical element (3) for an optical transmission system (1), comprising:

means (6) for determining transmitted optical signal powers in each of a plurality of different optical wavelength bands;

means (7) for determining which of the powers is greatest; and

means (8) for controlling an output power of the element (3), to ensure that said greatest power is below a threshold.

By determinirg optical powers in each of a plurality of different optical wavelength bands, power output can be controlled with reduced upper or lower margins, since there is no longer any need to allow for possible gain variations between different wavelengths.

By ascertaining which of the powers is greatest, the upper margin can be reduced to a first approximation, taking into account gain variations for different bandwidths, in a manner which is relatively straightforward to implement.

Advantageously the system comprises means for determining the threshold as the maximum power for a given risk of transmission errors. Whether determined dynamically or using a predetermined value, the upper margin can be reduced to a better approximation and an error signal for the power output control can be generated with a minimum of calculation.

Advantageously the system comprises means for determining the threshold as the minimum power for a given risk transmission errors. Again, this can be determined dynamically by feedback of BER values, or generated using a predetermined value. The lower margin can be reduced to a better approximation, and an error signal generated with a minimum of calculation.

Advantageously the threshold comprises a different level determined for each wavelength band. This enables the upper or lower margin to be reduced to a greater degree.

Advantageously an anticipated power is estimated and used to determine which band is closest to the threshold. Such control can take into account any effects such as gain tilt resulting from changed power levels, which might cause a different band to have the greatest power, or be closest to its threshold.

Preferably, the power determining means comprises means for measuring the amplitude of low frequency dither signals in each of the bands of the transmitted optical signal, means for measuring the total power, and means for deriving the power in each band from the amplitudes and the total power. This represents a particularly economical way of determining the power in each band, making use of dither signals which may be provided already, for other purposes. Measuring the dither amplitudes and deriving the power in each band need not use expensive optical processing hardware, but can be implemented relatively easily in low frequency electronic circuitry.

Advantageously the power determining means is located remotely from the element. It may be appropriate to measure the power at a receiving end after attenuation in the optical link, yet use the results to control an element at or near the transmitting end of the link.

Advantageously the per-band power is determined after wavelength demultiplexing at a receiver. This enables powers to be derived directly from signal amplitudes.

Advantageously the control system is incorporated in an optical amplifier. Such devices intrinsically may amplify different wavelength bands differently, and thus conventionally generous margins need to be allowed.

Advantageously, the control system alters the threshold in combination with controlling output power of an element in the transmission system.

Altering the threshold can achieve the same result as controlling the power output. This can be particularly advantageous if there is little scope for altering the power output, for example where upper and lower thresholds are relatively close. External attenuation or gain for some wavelengths, downstream of a transmitting element, or dispersion compensation or bit rate, would be examples of parameters affecting the threshold.

Advantageously, the element is controlled according to a subset of the determined powers. By controlling the element on the basis of a subset of the powers, priority can be given to that subset, whether it be because they are closest to thresholds or because they carry more valuable data, or any other reason.

According to another aspect of the invention, there is provided a A method of controlling an optical element (3) comprising the steps of:

determining optical powers in each of a plurality of different optical wavelength bands;

determining which of the powers is greatest; and

controlling an output power of the element (3) to ensure that said granted power is below a threshold.

In principle, any of the preferred features set out above can be combined as appropriate by a skilled man.

**Brief Description of the Drawings**

For a better understanding of the invention and to show how the same may be carried into effect, by way of example, embodiments will now be described with reference to the drawings in which:-

Figure 1 shows an optical transmission system including a control system of the present invention;

Figure 2 shows in schematic form a control system for use with the transmission system of figure 1;

Figure 3 shows in schematic form means for determining which band is closest to the threshold, for use in the control system of figure 2;

Figure 4 shows an alternative means for determining which band is closest to the threshold;

Figure 5 shows a threshold generator for use in the means shown in figure 4;

Figure 6 shows a further alternative means for determining which band is closest to the threshold, for use in the system of figure 2;

Figure 7 shows an optical amplifier with a control system of the invention;

Figure 8 shows means for determining the power in each band, suitable for use in the control system of figure 2;

Figure 9 shows an optical transmission system comprising a control system according to the invention; and

Figure 10 shows an optical transmission system comprising an external wavelength selective power modifier, and a control system according to the invention.

## Detailed Description

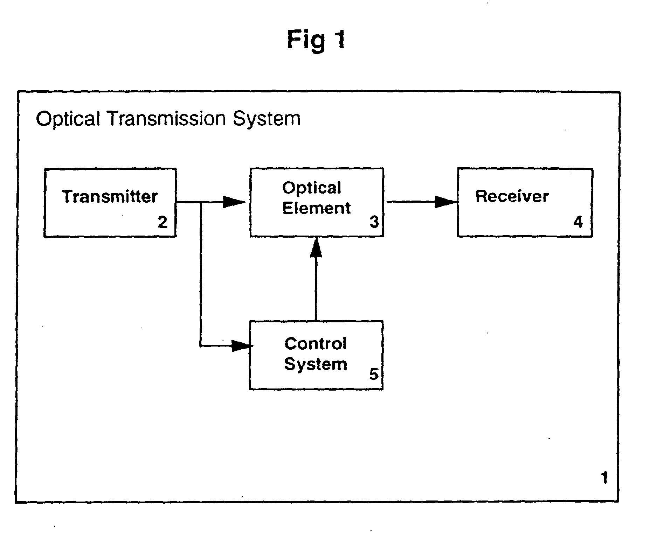

Figure 1 shows an optical transmission system comprising a transmitter 2, an optical element 3, and a receiver 4. A control system 5 is provided for controlling the optical element 3. The optical element 3 can be any optical element which affects the power of the optical signal in a controllable way. Thus it can be an optical amplifier, an optical filter, or an attenuator for example. Multiple such elements could be arranged in series or in parallel, and be controlled by the same control system. Furthermore, although not illustrated, the control system of the invention could be used to control the output power of the transmitter. If the transmitter is a semi-conductor laser, the control system could control the bias current of the laser.

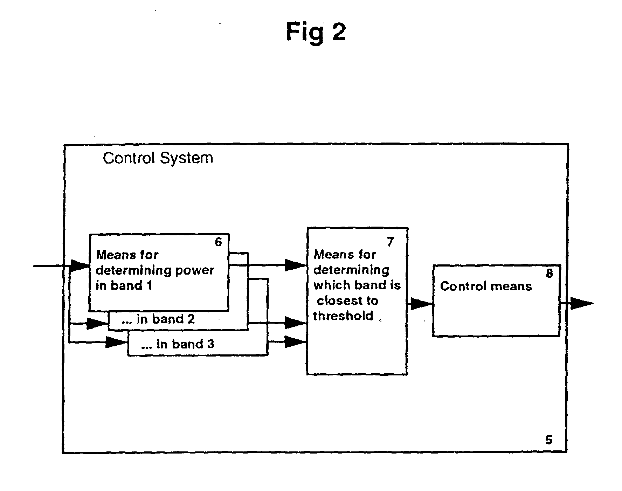

The control system will be described in more detail with reference to figure 2. Figure 2 shows three elements of the control system. Firstly there is a means 6 for determining the optical signal power in a particular wavelength band. A means 7 is provided for determining which band is closest to a given threshold. A control means 8 is provided for generating a control signal for the optical element on the basis of the optical signal power of one or more of the wavelength bands.

All three parts of the control system can be implemented in software to be run on conventional micro-controller hardware. Digital inputs to the micro-controller can be generated by an analogue to digital converter, fed by an optical to electrical converter such as a PIN diode. Such elements will have a low pass filtering effect.

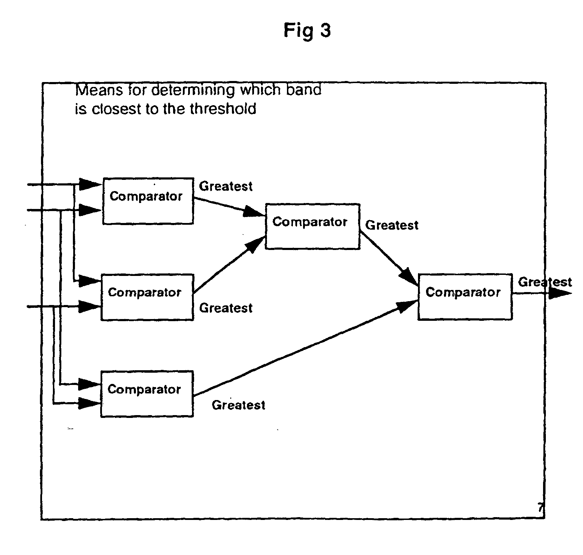

Further details of an example of how to implement the means for determining the power in each band, and how to implement the control means 8 will be set out later. Various ways of implementing the means 7 for determining which band is closest to the threshold will now be described with reference to figures 3 to 6. These figures show in schematic form functional features which can be implemented in practice by a conventional micro-processor.

Figure 3 shows inputting signals or values representing the power in the optical signal in each band (three bands are shown, though any number can be used). Pairs of these signals are compared to find the greatest. Two further stages of comparators can be used to find the greatest of all three inputs. At least where the threshold is higher than all the inputs, this method is sufficient to determine which band has an optical signal power closest to the threshold. This method may be sufficient for cases where the threshold differs little for the different bands. At the same time, or alternatively, the control system may be concerned with a lower threshold for signal power, at which optical noise will cause unacceptable transmission errors. In this case, a corresponding method can be used in which each comparator identifies the least power band, rather than the greatest power band. The control means 8 could then act on the basis of the band having least power (not illustrated).

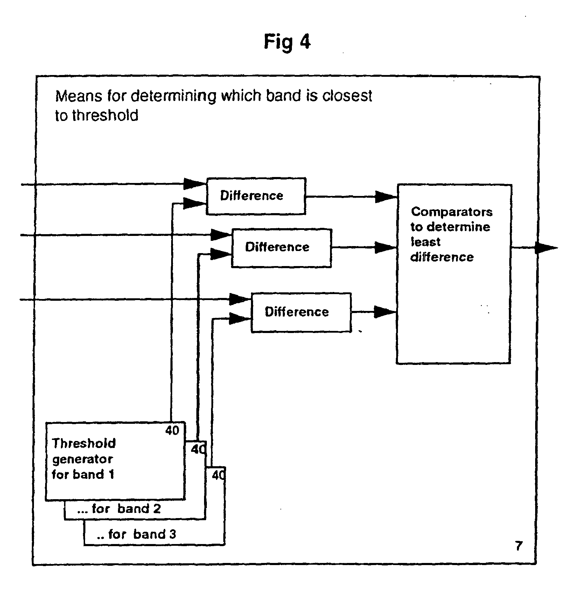

Figure 4 shows a slightly more complicated method which is suitable for systems where the threshold may be different for different bands. Here, a threshold generator 40 is provided for each band. A difference is obtained between the threshold and the measured power for each band. Comparators can then determine which band is closest to its respective threshold. If appropriate, the comparators can take into account the sign of the differences, to determine the least positive difference, so that if one band power measurement has exceeded a threshold, it is regarded as having the least difference. All of the functions shown in schematic form in figure 4 can be implemented in conventional micro-controller circuitry. As before, the threshold may be an upper threshold or a lower threshold or control could be based on a combination of both techniques.

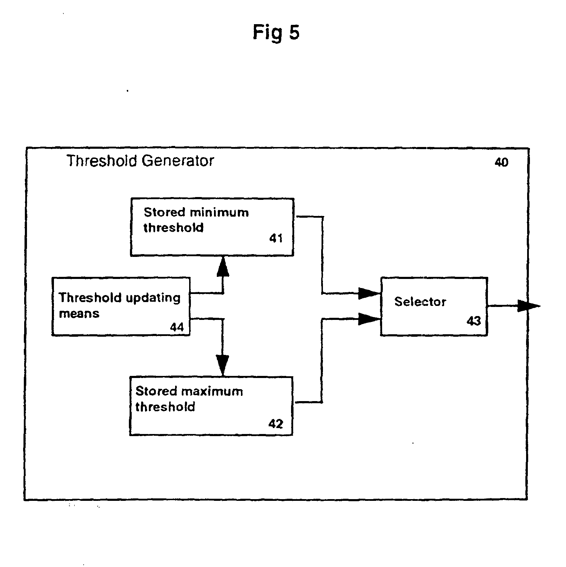

Figure 5 shows in more detail in schematic form a threshold generator for use with the means of figure 4. Lower and upper thresholds, may be stored as shown in elements 41 and 42, for selection by a selector 43. A threshold updating means 44 is shown to enable the thresholds to be altered, or dynamically controlled as parameters of the system change with age or operation. Again, the threshold generator can be implemented for any number of bands, using conventional micro-controller circuitry.

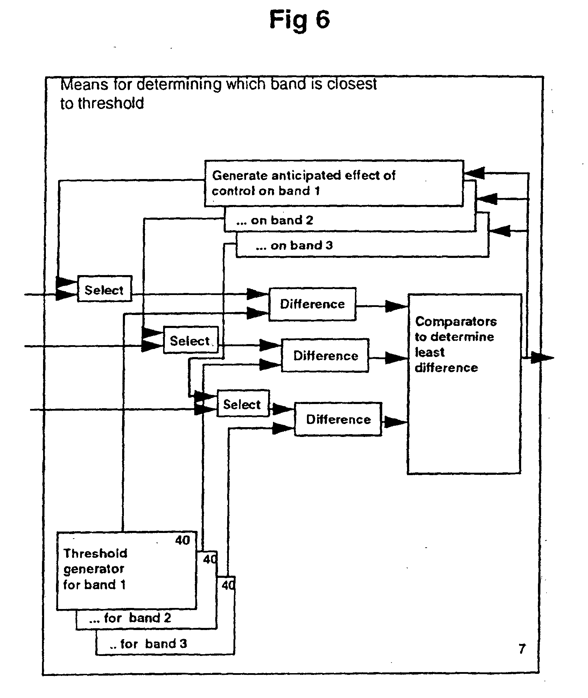

Figure 6 shows a further alternative means for determining which band is closest to the threshold. In this case, there is an addition to the means shown in figure 5, to enable the effect of the control means 8 to be anticipated in determining which band is closest to its threshold. For devices such as optical amplifiers where there may be considerable gain tilt, it may be possible to obtain better control by anticipating the effect of the control on each band. Then the determination of which band is closest to its respective threshold can be carried out wholly or partly on the basis of the anticipated rather than the measured power in each band.

Such a method may improve the stability of the control, and reduce oscillations.

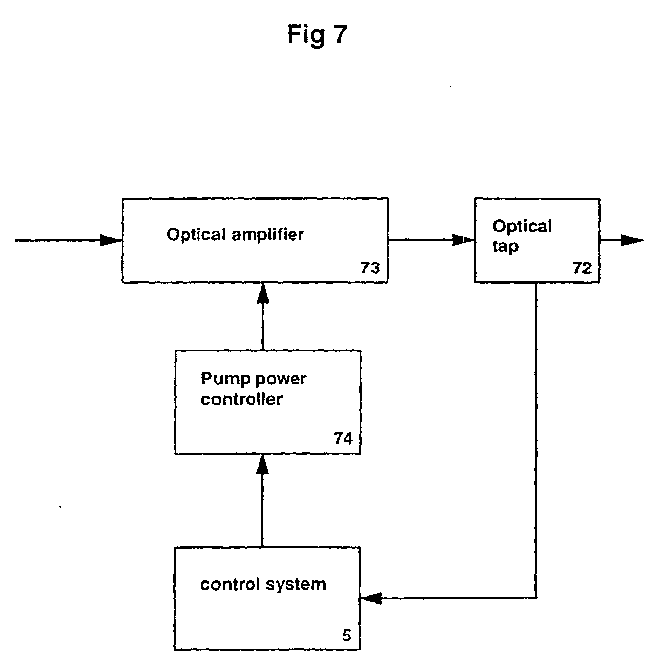

Figure 7 shows the control system of the invention applied to an optical amplifier 73. An optical tap 72 is shown on the output of the optical amplifier 73, to enable the optical amplifier control system 5 to be operated in dependence on the output of the optical amplifier. There may be other inputs to the control system (not shown) such as the respective input powers in each band.

The output of the optical amplifier is controlled by controlling the power of a pump laser, using a pump power controller 74. The control system 5 will be arranged to give a maximum output power without any of the powers in each of the respective bands, exceeding their respective thresholds at which unacceptable transmission errors are caused. The control system may also ensure that the power is sufficient that all bands have a signal power exceeding a minimum threshold, at which noise will cause transmission errors. If under some circumstances the minimum threshold is close to or even above the maximum threshold, some transmission errors may be inevitable. In this case the control system can be arranged to minimise the transmission errors, either using a predetermined algorithm, or by actively feeding back a bit error rate as detected at a receiver.

Conceivably, some wavelength bands can be given a higher priority than others, if they are carrying more valuable data, or more sensitive data, or transmission control data. In this case, at some periods, or all the time, control could be carried out on the basis of this subset of one or more higher priority bands, to ensure minimum BER for these bands, even if this is at the expense of degrading the transmission of other bands.

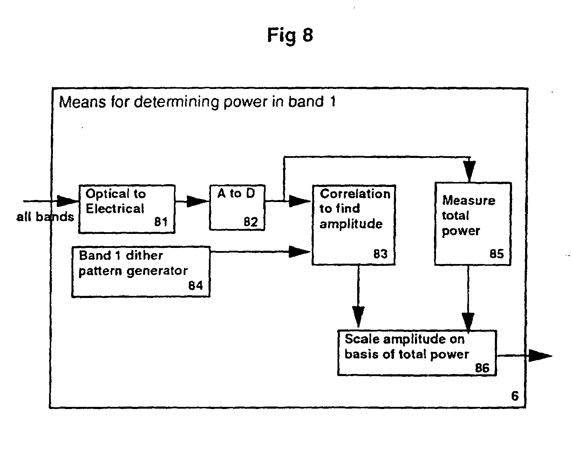

Figure 8 shows in schematic form in more detail, an example of a means for determining the power in each band.

Figure 8 shows an optical to electrical converter 81, and an analogue to digital converter 82 feeding a low frequency portion of all bands to a correlation means 83 and a total power measurement means 85. A dither pattern generator for a particular band (band 1 as illustrated in figure 8) is shown in figure 8 with reference numeral 84. This pattern generator feeds the correlation means. The strength of correlation indicates an amplitude of the specific dither pattern in band 1. This method relies on different dither patterns being applied to each different band. The different dither patterns should be orthogonal to enable the correlation means to identify the dither uniquely for each band. Means for scaling the detected amplitude 86 are shown in figure 8, operating on the basis of the total power measured straight from the output of the A to D converter 82, optionally with a correction factor to compensate for the effects of the optical tap 72, the optical to electrical converter 81, and the analogue to digital converter 82. This technique for determining power in each wavelength band is set out in more detail in US 5 513 029 (Roberts), incorporated herein by reference.

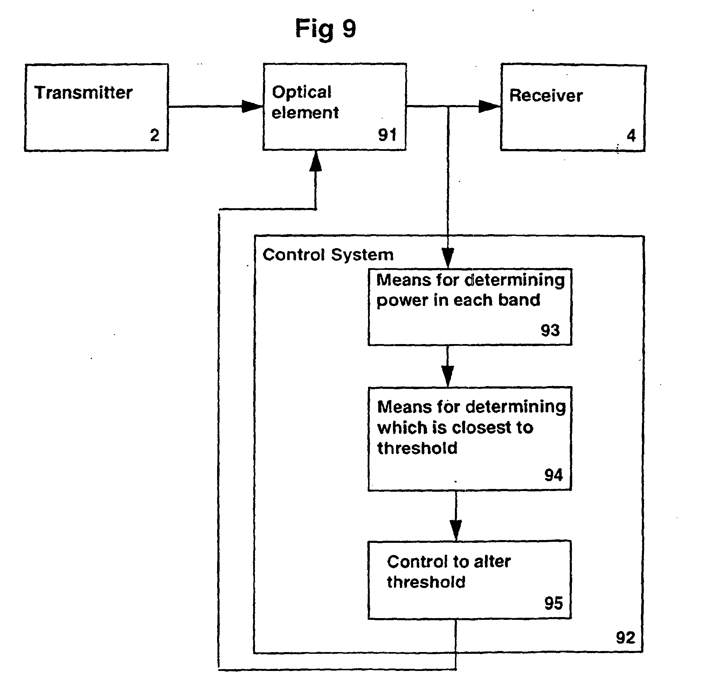

Figure 9 shows a transmission system in which an optical element 91 is provided, controllable by a control system 92. The control system 92 controls a parameter of the optical element which affects an allowable power threshold. The control system comprises means for determining the power in each band, means for determining which band is closest to a power threshold, and control means 95 for altering a parameter of the optical element which affects the threshold. In principle, upper and lower power thresholds for a transmitter or optical amplifier, for example, may be varied by providing external gain somewhere else in the optical path, or attenuation, for example by selective filtering. The number of bands which are multiplexed together can also affect the thresholds, and therefore the optical element of figure 9 could be a multiplexing or switching device which can control the number of bands being multiplexed, and alter this by rerouting or retiming some signals as appropriate.

The control system is shown in figure 9 as being operable on the basis of the output of the optical element. This is more appropriate if the optical element is an optical amplifier, or if the threshold is the lower power threshold. In other circumstances, it may be more appropriate to feed the control system from elsewhere in the transmission system.

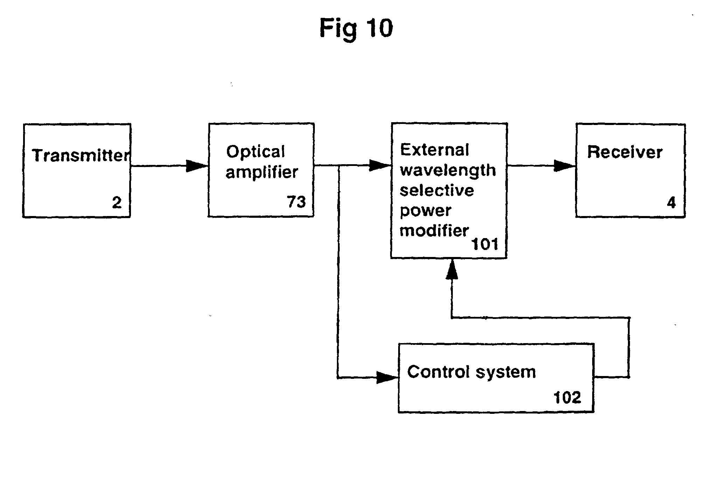

Figure 10 shows an example in which the optical element is represented by an external wavelength selective power modifier, such as a filter. The control system 102 for the filter can be implemented in a similar manner to the control systems described above. It is fed by a signal taken upstream of the power modifier, though it could be fed from elsewhere in the optical path, or from a combination of signals before and after the power modifier 101.

In the embodiments shown in figures 9 and 10 there would be some form of control of the output power of the transmitter or optical amplifiers in the optical path. The power control may take the form of the power control described earlier with reference to figures 1 to 8. In particular, an example of a suitable method for the control means 8 of figure 2 will now be described. The basic control loop should include the following steps:-

1. Find the wavelength with the greatest power (using any of the methods described, for example).
2. Calculate the total output power that would be expected to give that wavelength a power equal to the desired peak power setting.

3. Subtract from this the present total output power, to give the power error.

4. Control the total output power setting using a first order digital control loop according to the following equation:-

$$\text{next power setting} = \text{present power setting} + K \times \text{power error}$$

(where K sets the loop gain).

5. Control the amplifier or transmitter to achieve that total output power setting by another first order digital control loop. This second loop should have a time constant at least ten times faster than the time taken to complete all these steps once.

6. Return to step 1.

This method of peak power control eliminates the danger of one of the WDM signals being seriously degraded by non-linearities, as the power level of each signal is controlled to be less than the desired power setting or threshold. The calculation that extrapolates the desired total power level can be a simple scaling of the relative power levels. Alternatively it can include more subtle calculations of the effect of gain tilt resulting from the changed power levels, and consider whether gain tilt would place another signal above the desired peak power setting or upper threshold.

The second loop time constant should be faster than the overall loop to ensure minimal phase shift by the faster loop within the slower loop. Typically the per-band power detection may be carried out every second, depending on how fast the dither correlation can be carried out. The total output power may be measured every millisecond, to enable an adequate and stable response to optical transients.

If a subset of the wavelengths present is examined for greatest power, this could reflect the importance of signals, or the bit rate, and thus susceptibility to non-linearities. If the bit rate is lowered, the upper or lower thresholds may be altered.

Other methods of determining the powers of some or all of the wavelengths present could be used, such as optical filtering, demultiplexing, or optical spectrum analysis. These would involve providing more expensive hardware, but may enable improved accuracy or speed of measurement.

Optical power levels could be measured at a remote location such as the receiver, and data or control commands communicated to the site of the elements to be controlled. This is less desirable if any gain tilt or attenuation between the control site and measurement site would reduce the accuracy of the control. Nevertheless, it might be advantageous to include such tilt or attenuation within the feedback loop particularly for embodiments in which the lower power threshold is measured.

The invention can enable upper or lower margins to be reduced, thus error rates can be reduced, or transmission distances increased, or bit rates increased, or cheaper lower power transmitters employed.

Other variations and embodiments will be apparent to a skilled man within the scope of the claims.

## Claims

1.  A control system for an optical element (3) for an optical transmission system (1), comprising:

    means (6) for determining transmitted optical signal powers in each of a plurality of different optical wavelength bands;
    means (7) for determining which of the powers is greatest; and
    means (8) for controlling an output power of the element (3), to ensure that said greatest power is below a thresholds.

2.  The system of claim 1 wherein the means (7) for determining which of the powers is greatest, comprises means for determining which of the powers is closest to the threshold.

3.  The system of any preceding claim comprising means for determining the threshold as the maximum power for a given risk of transmission errors.

4.  The system of any preceding claim comprising means for determining a second threshold as the minimum power for a given risk of transmission errors and means for determining which of the powers is closest to the second threshold, the means for controlling the output power being further operable on the basis of the power closest to the second threshold.

**5.** The system of claim 2 wherein the threshold comprises an individual thresholds for each band, wherein the means (7) for determining which of the powers is closest to the threshold, is operable to compare each power to its respective individual threshold.

**6.** The system of any preceding claim wherein the means (7) for determining which of the powers is greatest, comprises means for estimating a future power for at least one of the bands, wherein the greatest power is determined on the basis of the estimated future power.

**7.** The system of any preceding claim wherein the means (6) for determining transmitted optical signal powers comprises:

means (83) for measuring the amplitude of low frequency dither signals in each of the bands of the transmitted optical signal;
means (85) for measuring the total power, and
means for deriving the power in each band from the amplitudes and the total power.

**8.** The system of any preceding claim wherein means for determining transmitted optical signal powers is located remotely from the element.

**9.** The system of claim 8 wherein the element is a transmitter, and the means for determining transmitted optical signal powers, is located after a wavelength demultiplexing stage in a receiver of the transmission system.

**10.** The system of any preceding claim wherein the control means (8) is operable to maintain at least the determined power or powers within a desired range.

**11.** The system of any preceding claim further comprising means for selecting a subset of more than one of the determined powers and wherein the means (7) for determining which of the powers is greatest and the control means (8), are responsive to the selected subset of determined powers.

**12.** The system of any preceding daim comprising means for controlling, on the basis of the greatest power, a parameter which affects the threshold.

**13.** An optical amplifier incorporating the control system (8) of any preceding claim, wherein the power determining means (6) is operable to determine output powers of the amplifier.

**14.** A method of controlling an optical element (3) comprising the steps of:

determining optical powers in each of a plurality of different optical wavelength bands;
determining which of the powers is greatest; and
controlling an output power of the element (3) to ensure that said greatest power is below a threshold.

**15.** The method of claim 14 wherein the step of determining which of the powers is greatest, comprises determining which of the powers is closest to the threshold.

**16.** The method of claim 14 or clam 15 comprising determining the threshold as the maximum power for a given risk of transmission errors.

**17.** The method of any of claims 14 to 16 comprising determining a second threshold as the minimum power for a given risk of transmission errors and determining which of the powers is closest to the second threshold the step of controlling an output power being performed on the basis of the power closest to the second threshold.

**18.** The method of any of claims 14 to 17 wherein the threshold comprises an individual threshold for each band, wherein the step of determining which of the powers is closest to the threshold, comprises comparing each power to its respective individual threshold.

**19.** The method of any of claims 14 to 18 wherein the step of determining which of the powers is greatest, comprises estimating a future power for at least one of the bands, wherein the greatest power is determined on the basis of the estimated future power.

20. The method of any of claims 14 to 19 wherein the step of for determining transmitted optical signal powers comprises:

measuring the amplitude of low frequency dither signals in each of the bands of the transmitted optical signal; measuring the total power, and deriving the pcwer in each band from the amplitudes and the total power.

21. The method of any of claims 14 to 20 wherein the step of controlling an output power is performed to maintain at least the determined power or powers within a desired range.

22. The method of any of claims 14 to 21 further comprising means for controlling, on the basis of the greatest power, a parameter which affects the thresholds.

**Patentansprüche**

1. Steuersystem für ein optisches Element (3) für ein optisches Übertragungssystem (1), das Folgendes umfasst:

Einrichtungen (6) zur Feststellung der übertragenen optischen Signalleistungen in jedem einer Vielzahl von unterschiedlichen optischen Wellenlängen-Bändern; Einrichtungen (7) zur Feststellung, welche dieser Leistungen die höchste ist; und Einrichtungen (8) zur Steuerung einer Ausgangsleistung des Elementes (3), um sicherzustellen, dass die höchste Leistung unterhalb eines Schwellenwertes liegt.

2. System nach Anspruch 1, bei dem die Einrichtung (7) zur Feststellung, welche der Leistungen die höchste ist, Einrichtungen zur Feststellung umfasst, welche der Leistungen am nächsten an dem Schwellenwert liegt.

3. System nach einem der vorhergehenden Ansprüche, mit Einrichtungen zur Bestimmung des Schwellenwertes als die maximale Leistung für eine vorgegebene Gefahr von Übertragungsfehlen.

4. System nach einem der vorhergehenden Ansprüche, das Einrichtungen zur Bestimmung eines zweiten Schwellenwertes als die minimale Leistung für eine vorgegebene Gefahr von Übertragungsfehlem und Einrichtungen zur Feststellung umfasst, welche der Leistungen am nächsten an dem zweiten Schwellenwert liegt, wobei die Einrichtungen zur Steuerung der Ausgangsleistung weiterhin auf der Grundlage der am nächsten an dem zweiten Schwellenwert liegenden Leistung betreibbar sind.

5. System nach Anspruch 2, bei dem der Schwellenwert einen individuellen Schwellenwert für jedes Band umfasst, wobei die Einrichtung (7) zur Feststellung, welche der Leistungen am nächsten an dem Schwellenwert liegt, betreibbar ist, um jede Leistung mit ihrem jeweiligen individuellen Schwellenwert zu vergleichen.

6. System nach einem der vorhergehenden Ansprüche, bei dem die Einrichtung (7) zur Feststellung, welche der Leistungen die höchste ist, Einrichtungen zur Abschätzung einer zukünftigen Leistung für zumindest eines der Bänder umfasst, wobei die höchste Leistung auf der Grundlage der abgeschätzten zukünftigen Leistung bestimmt wird.

7. System nach einem der vorhergehenden Ansprüche, bei dem die Einrichtung (6) zur Feststellung der übertragenen optischen Signalleistungen Folgendes umfasst:

Einrichtungen (83) zur Messung der Amplitude von eine niedrige Frequenz aufweisenden Schwankungssignalen in jedem der Bänder des übertragenen optischen Signals; Einrichtungen (85) zur Messung der Gesamtleistung; und Einrichtungen zur Ableitung der Leistung in jedem Band von den Amplituden und der Gesamtleistung.

8. System nach einem der vorhergehenden Ansprüche, bei dem die Einrichtung zur Feststellung der übertragenen optischen Signalleistungen an einer von dem Element entfernt liegenden Stelle angeordnet ist.

9. System nach Anspruch 8, bei dem das Element ein Sender ist, und bei dem die Einrichtung zur Feststellung der übertragenen optischen Signalleistungen nach einer Wellenlängen-Demultiplexierungsstufe in einem Empfänger des Überträgungssystems angeordnet ist.

10. System nach einem der vorhergehenden Ansprüche, bei dem die Steuereinrichtung (8) betreibbar ist, um zumindest die festgestellte Leistung oder die festgestellten Leistungen innerhalb eines gewünschten Bereiches zu halten.

11. System nach einem der vorhergehenden Ansprüche, das weiterhin Einrichtungen zur Auswahl einer Teilmenge von mehr als einer der festgestellten Leistungen umfasst, und bei der die Einrichtung (7) zur Feststellung, welche der Leistungen am höchsten ist, und die Steuereinrichtung (8) auf die ausgewählte Teilmenge der festgestellten Leistungen ansprechen.

12. System nach einem der vorhergehenden Ansprüche, mit Einrichtungen zur Steuerung eines Parameters, der den Schwellenwert beeinflusst, auf der Grundlage der höchsten Leistung.

13. Optischer Verstärker, der ein Steuersystem (8) nach einem der vorhergehenden Ansprüche beinhaltet, wobei die die Leistung feststellende Einrichtung (6) zur Feststellung der Ausgangsleistungen des Verstärkers betreibbar ist.

14. Verfahren zur Steuerung eines optischen Elementes (3), mit den folgenden Schritten:

Feststellen der optischen Leistungen in jedem einer Vielzahl von unterschiedlichen optischen Wellenlängen-Bändern;
Feststellen, welche der Leistungen die höchste ist; und
Steuern einer Ausgangsleistung des Elementes (3), um sicherzustellen, dass die höchste Leistung unterhalb eines Schwellenwertes liegt.

15. Verfahren nach Anspruch 14, bei dem der Schritt der Feststellung, welche der Leistungen die höchste ist, die Feststellung umfasst, welche der Leistungen am nächsten an dem Schwellenwert liegt.

16. Verfahren nach Anspruch 14 oder 15, mit Einrichtungen zur Feststellung des Schwellenwertes als maximale Leistung für eine vorgegebene Gefahr von Übertragungsfehlem.

17. Verfahren nach einem der Ansprüche 14-16, das die Feststellung eines zweiten Schwellenwertes als die minimale Leistung für eine vorgegebene Gefahr von Übertragungsfehlem und die Feststellung umfasst, welche der Leistungen am nächsten an dem zweiten Schwellenwert liegt, wobei der Schritt der Steuerung einer Ausgangsleistung auf der Grundlage der Leistung ausgeführt wird, die am nächsten an dem zweiten Schwellenwert liegt.

18. Verfahren nach einem der Ansprüche 14-17, bei dem der Schwellenwert einen individuellen Schwellenwert für jedes Band umfasst, wobei der Schritt der Feststellung, welche der Leistungen am nächsten an dem Schwellenwert liegt, den Vergleich jeder Leistung mit ihrem jeweiligen individuellen Schwellenwert umfasst.

19. Verfahren nach einem der Ansprüche 14-18, bei dem der Schritt der Feststellung, welche der Leistungen am größten ist, die Abschätzung einer zukünftigen Leistung für zumindest eines der Bänder umfasst, wobei die höchste Leistung auf der Grundlage der abgeschätzten zukünftigen Leistung bestimmt wird.

20. Verfahren nach einem der Ansprüche 14-19, bei dem der Schritt der Feststellung der ausgesandten optischen Signalleistungen Folgendes umfasst:

Messen der Amplitude von eine niedrige Frequenz aufweisenden Schwankungssignalen in jedem der Bänder des übertragenen optischen Signals;
Messen der Gesamtleistung; und
Ableiten der Leistung in jedem Band von den Amplituden der Gesamtleistung.

21. Verfahren nach einem der Ansprüche 14-20, bei dem der Schritt der Steuerung einer Ausgangsleistung ausgeführt wird, um zumindest die festgestellte Leistung oder die Leistungen innerhalb eines gewünschten Bereiches zu halten.

22. Verfahren nach einem der Ansprüche 14-21, das weiterhin Einrichtungen zur Steuerung eines Parameters, der den Schwellenwert beeinflusst, auf der Grundlage der höchsten Leistung umfasst.

**Revendications**

1. Un système de commande pour un élément optique (3) pour un système de transmission optique (1), comprenant :

   un moyen (6) pour déterminer des puissances de signaux optiques émis dans chacune d'une multiplicité de bandes de longueurs d'onde optiques différentes;
   un moyen (7) pour déterminer laquelle des puissances est la plus grande; et
   un moyen (8) pour commander une puissance de sortie de l'élément (3), pour garantir que cette plus grande puissance soit inférieure à un seuil.

2. Le système de la revendication 1, dans lequel le moyen (7) pour déterminer laquelle des puissances est la plus grande, comprend un moyen pour déterminer laquelle des puissances est la plus proche du seuil.

3. Le système de l'une quelconque des revendications précédentes, comprenant un moyen pour déterminer le seuil comme la puissance maximale pour un risque d'erreurs de transmission donné.

4. Le système de l'une quelconque des revendications précédentes, comprenant un moyen pour déterminer un second seuil comme la puissance minimale pour un risque d'erreurs de transmission donné, et un moyen pour déterminer laquelle des puissances est la plus proche du second seuil, le moyen pour commander la puissance de sortie pouvant en outre fonctionner sur la base de la puissance la plus proche du second seuil.

5. Le système de la revendication 2, dans lequel le seuil comprend un seuil individuel pour chaque bande, dans lequel le moyen (7) pour déterminer laquelle des puissances est la plus proche du seuil, peut fonctionner de façon à comparer chaque puissance à son seuil individuel respectif.

6. Le système de l'une quelconque des revendications précédentes, dans lequel le moyen (7) pour déterminer laquelle des puissances est la plus grande, comprend un moyen pour estimer une puissance future pour l'une au moins des bandes, dans lequel la plus grande puissance est déterminée sur la base de la puissance future estimée.

7. Le système de l'une quelconque des revendications précédentes, dans lequel le moyen (6) pour déterminer des puissances de signaux optiques émis comprend :

   un moyen (83) pour mesurer l'amplitude de signaux de configuration oscillatoire de fréquence basse dans chacune des bandes du signal optique émis;
   un moyen (85) pour mesurer la puissance totale; et
   un moyen pour déterminer la puissance dans chaque bande à partir des amplitudes et de la puissance totale.

8. Le système de l'une quelconque des revendications précédentes, dans lequel le moyen pour déterminer des puissances de signaux optiques émis se trouve à distance de l'élément.

9. Le système de la revendication 8, dans lequel l'élément est un émetteur, et le moyen pour déterminer des puissances de signaux optiques émis est placé après un étage de démultiplexage de longueur d'onde, dans un récepteur du système de transmission.

10. Le système de l'une quelconque des revendications précédentes, dans lequel le moyen de commande (8) peut fonctionner de façon à maintenir à l'intérieur d'une plage désirée au moins la puissance ou les puissances déterminées.

11. Le système de l'une quelconque des revendications précédentes, comprenant en outre un moyen pour sélectionner un sous-ensemble de plus d'une des puissances déterminées, et dans lequel le moyen (7) pour déterminer laquelle des puissances est la plus grande, et le moyen de commande (8) réagissent au sous-ensemble de puissances déterminées qui est sélectionné.

12. Le système de l'une quelconque des revendications précédentes, comprenant un moyen pour commander, sur la base de la plus grande puissance, un paramètre qui affecte le seuil.

13. Un amplificateur optique incorporant le système de commande (8) de l'une quelconque des revendications précédentes, dans lequel le moyen de détermination de puissance (6) peut fonctionner de façon à déterminer des puissances de sortie de l'amplificateur.

14. Un procédé pour commander un élément optique (3), comprenant les étapes suivantes :

   on détermine des puissances optiques dans chacune d'une multiplicité de bandes de longueurs d'onde optiques différentes;
   on détermine laquelle des puissances est la plus grande; et
   on commande une puissance de sortie de l'élément (3) pour garantir que cette plus grande puissance soit inférieure à un seuil.

15. Le procédé de la revendication 14, dans lequel l'étape de détermination de laquelle des puissances est la plus grande, comprend la détermination de laquelle des puissances est la plus proche du seuil.

16. Le procédé de la revendication 14 ou de la revendication 15, comprenant la détermination du seuil comme la puissance maximale pour un risque d'erreurs de transmission donné.

17. Le procédé de l'une quelconque des revendications 14 à 16, comprenant la détermination d'un second seuil comme la puissance minimale pour un risque d'erreurs de transmission donné, et la détermination de laquelle des puissances est la plus proche du second seuil, l'étape de commande d'une puissance de sortie étant accomplie sur la base de la puissance la plus proche du second seuil.

18. Le procédé de l'une quelconque des revendications 14 à 17, dans lequel le seuil comprend un seuil individuel pour chaque bande, dans lequel l'étape de détermination de laquelle des puissances est la plus proche du seuil, comprend la comparaison de chaque puissance à son seuil individuel respectif.

19. Le procédé de l'une quelconque des revendications 14 à 18, dans lequel l'étape de détermination de laquelle des puissances est la plus grande, comprend l'estimation d'une puissance future pour l'une au moins des bandes, dans lequel la plus grande puissance est déterminée sur la base de la puissance future estimée.

20. Le procédé de l'une quelconque des revendications 14 à 19, dans lequel l'étape pour déterminer des puissances de signaux optiques émis comprend les étapes suivantes :

   on mesure l'amplitude de signaux de configuration oscillatoire de fréquence basse dans chacune des bandes du signal optique émis;
   on mesure la puissance totale; et
   on détermine la puissance dans chaque bande d'après les amplitudes et la puissance totale.

21. Le procédé de l'une quelconque des revendications 14 à 20, dans lequel l'étape de commande d'une puissance de sortie est accomplie de façon à maintenir à l'intérieur d'une plage désirée au moins la puissance ou les puissances déterminées.

22. Le procédé de l'une quelconque des revendications 14 à 21, comprenant en outre un moyen pour commander, sur la base de la plus grande puissance, un paramètre qui affecte le seuil.

# Fig 1

Optical Transmission System

| Transmitter 2 | → | Optical Element 3 | → | Receiver 4 |

Control System 5

1

# Fig 2

**Control System**

```
┌──────────────────────────────────────────────────┐  6
│  Means for                                          │
│  determining power                                  │
│  in band 1                                          │
└──────────────────────────────────────────────────┘
     ... in band 2
        ... in band 3
```

| | 7 | | 8 |
|---|---|---|---|
| | Means for determining which band is closest to threshold | | Control means |

5

## Fig 3

Means for determining which band is closest to the threshold

# Fig 4

Means for determining which band is closest to threshold

Difference

Difference

Difference

Comparators to determine least difference

Threshold generator for band 1   40

... for band 2   40

.. for band 3   40

7

# Fig 5

Threshold Generator 40

Stored minimum threshold 41

Threshold updating means 44

Stored maximum threshold 42

Selector 43

# Fig 6

Means for determining which band is closest to threshold

Generate anticipated effect of control on band 1

... on band 2

... on band 3

Select

Select

Select

Difference

Difference

Difference

Comparators to determine least difference

Threshold generator for band 1

... for band 2

.. for band 3

40

40

40

7

# Fig 7

```
                ┌─────────────────────────┐         ┌──────────────┐
   ───────────► │   Optical amplifier      │ ──────► │ Optical      │ ────►
                │                     73   │         │ tap     72   │
                └─────────────────────────┘         └──────────────┘
                            ▲                               │
                            │                               │
                ┌─────────────────────────┐                │
                │   Pump power             │                │
                │   controller             │                │
                │                     74   │                │
                └─────────────────────────┘                │
                            ▲                               │
                            │                               │
                ┌─────────────────────────┐                │
                │   control system         │ ◄──────────────┘
                │                     5    │
                └─────────────────────────┘
```

## Fig 8

Means for determining power in band 1

all bands → | Optical to Electrical 81 | → | A to D 82 | → | Correlation to find amplitude 83 |

| Measure total power 85 |

| Band 1 dither pattern generator 84 | →

| Scale amplitude on basis of total power 86 | →

6

# Fig 9

```
┌──────────────────┐        ┌──────────────────┐        ┌──────────────────┐
│ Transmitter      │        │ Optical          │        │ Receiver         │
│                  │───────▶│ element          │───┬───▶│                  │
│                2 │        │               91 │   │    │                4 │
└──────────────────┘        └──────────────────┘   │    └──────────────────┘
                                     ▲               │
                                     │               │
        ┌────────────────────────────┘               │
        │   ┌─────────────────────────────────────── │ ──────────────┐
        │   │ Control System                         │               │
        │   │                      ┌──────────────────▼────────────┐  │
        │   │                      │ Means for determining         │  │
        │   │                      │ power in each band            │  │
        │   │                      │                            93 │  │
        │   │                      └───────────────┬───────────────┘  │
        │   │                                      ▼                  │
        │   │                      ┌───────────────────────────────┐  │
        │   │                      │ Means for determining         │  │
        │   │                      │ which is closest to           │  │
        │   │                      │ threshold                     │  │
        │   │                      │                            94 │  │
        │   │                      └───────────────┬───────────────┘  │
        │   │                                      ▼                  │
        │   │                      ┌───────────────────────────────┐  │
        │   │                      │ Control to alter              │  │
        │   │                      │ threshold                     │  │
        │   │                      │                            95 │  │
        │   │                      └───────────────┬───────────────┘  │
        │   │                                      │              92  │
        │   └──────────────────────────────────── │ ─────────────────┘
        └──────────────────────────────────────────┘
```

# Fig 10

```
┌──────────────┐      ┌──────────────┐      ┌──────────────┐      ┌──────────────┐
│ Transmitter  │─────▶│ Optical      │─────▶│ External     │─────▶│ Receiver     │
│              │      │ amplifier    │      │ wavelength   │      │              │
│              │      │              │      │ selective    │      │              │
│          2   │      │          73  │      │ power        │      │          4   │
└──────────────┘      └──────────────┘      │ modifier 101 │      └──────────────┘
                                            └──────────────┘
                                                   ▲
                                            ┌──────────────────┐
                                            │ Control system   │
                                            │              102 │
                                            └──────────────────┘
```